# EUROPEAN PATENT SPECIFICATION

(11) **EP 4 035 910 B1**
(45) Date of publication and mention of the grant of the patent: **06.11.2024**
(21) Application number: 20869665.8
(22) Date of filing: 11.09.2020
(51) Int. Cl.: B60C 11/03, B60C 11/13

(54) **MOTORBIKE TIRE**
MOTORRADREIFEN
PNEU DE MOTOCYCLETTE

(30) Priority: 24.09.2019 JP 2019173192; 24.09.2019 JP 2019173193
(43) Date of publication of application: 03.08.2022
(73) Proprietor: BRIDGESTONE CORPORATION, Chuo-ku Tokyo 104-8340 (JP)
(72) Inventor: HARADA, Yoichi, Tokyo 104-8340 (JP)
(74) Representative: Marks & Clerk LLP
(86) International application number: PCT/JP2020/034574
(87) International publication number: WO 2021/060033

(56) References cited:
- EP-A1- 2 626 220
- EP-A1- 3 705 313
- EP-A1- 3 705 314
- WO-A1-2014/181614
- WO-A1-2017/073769
- CN-A- 108 290 452
- CN-A- 110 143 104
- GB-A- 2 114 069
- JP-A- 2015 091 703
- JP-A- 2015 123 771
- JP-A- 2020 142 587
- JP-B2- 4 740 308
- US-A1- 2020 282 774
- US-A1- 2020 282 775

## Description

### TECHNICAL FIELD

The present invention relates to motorcycle tires (hereinafter also referred to as simply "tires"), and more particularly, to motorcycle tires having improved water draining capacity and achieving both excellent dry and wet performance.

### BACKGROUND ART

There have conventionally been proposed motorcycle tires having a tread pattern in which many tilted grooves are arranged to ensure driving stability on dry and wet ground. For example, Patent Document 1 proposes a tread pattern that enables improvement of wear resistance, steering stability, and ride quality in a balanced manner.

Specifically, in a motorcycle tire having a tread with a designated rotational direction, the tread includes a plurality of tilted main grooves that extend outward in the tire axis direction from the center area to the outside of the tread edges, and a plurality of tilted sub grooves that extend outward in the tire axis direction from the middle areas to the shoulder areas. The tilted main grooves and the tilted sub grooves are each provided with a gradually narrowing terminal portion with the groove width gradually decreasing toward the first grounding side in the rotational direction, in which the straight line connecting, in the shortest distance, the end of the gradually narrowing terminal portion in a tilted main groove on later grounding side in the rotational direction and the end of the gradually narrowing terminal portion in a tilted sub groove on the first grounding side in the rotational direction is 85 to 90° relative to the tire circumferential direction. Attention is also drawn to the disclosures of JP4740308B2, CN108290452A, WO2017/073769A1 and EP2626220A1.

### RELATED ART DOCUMENT

### PATENT DOCUMENT

[Patent Document 1] JP2014-205395A

### SUMMARY OF THE INVENTION

### PROBLEMS TO BE SOLVED BY THE INVENTION

However, Patent Document 1 has not conducted any investigation on the water draining capacity of the tire, as well as demonstrated insufficient performance of the tire on wet ground. This problem is especially pronounced in weather-susceptible tires, such as touring and scooter tires.

Accordingly, an object of the present invention is to provide a motorcycle tire that has improved water draining capacity and is excellent in both dry and wet performance.

### MEANS FOR SOLVING THE PROBLEMS

In order to solve the above problems, the present inventor has intensively studied to find that the problems can be solved by making a main groove formed in a tread a predetermined shape, thereby completing the present invention.

The motorcycle tire of the present invention is a motorcycle tire as claimed in claim 1. Here, the main groove refers to a groove having a groove depth from 2.0 to 11 mm, and a groove width from 2.5 to 20.0 mm. It is noted that the groove depth refers to a depth at the deepest point, and the groove width refers to the maximum width of an opening in the cross section perpendicular to the extending direction of the groove.

In the tire of a preferred embodiment of the present invention, the at least one main groove becomes shallower outward in a tread width direction.

Preferably, in the tire of the present invention, the at least one main groove extends from a center area to a shoulder area. Preferably, in addition, in the tire of the present invention, the angles of the groove wall on the first grounding side in the rotational direction and of the groove wall on the later grounding side in the rotational direction are ±20° relative to the perpendicular direction at the bottom of the at least one main groove. Preferably, in addition, in the tire of the present invention, the number of the widened portions is 20 or less. Preferably, in addition, in the tire of the present invention, the at least one main groove is provided with a ridge in the bottom of the widened portion. Here, the center area refers to an area in the tread to be in contact with the ground when a motorcycle is run with the tire inflated to normal internal pressure and loaded with a normal load, while the shoulder area refers to an area on either side of the center area of the tread.

### EFFECTS OF THE INVENTION

According to the present invention, a motorcycle tire having improved water draining capacity and achieving both excellent dry and wet performance can be provided.

### BRIEF DESCRIPTION OF THE DRAWINGS

FIG. 1 is one exemplary partial developed view showing the tread in a motorcycle tire according to the present invention.
FIG. 2 is another exemplary partial developed view showing the tread in a motorcycle tire according to the present invention.
FIG. 3 is one exemplary plan view showing a main groove in a motorcycle tire according to the present invention.
FIG. 4 is another exemplary plan view showing a main groove in a motorcycle tire according to the present invention.
FIG. 5 is yet another exemplary plan view showing a main groove in a motorcycle tire according to the present invention.
FIG. 6 is still another exemplary plan view showing a main groove in a motorcycle tire according to the present invention.
FIG. 7 is a half cross-sectional view in the tire width direction of a motorcycle tire in one preferred embodiment of the present invention.
FIG. 8 is a half cross-sectional view in the tire width direction of a motorcycle tire in another preferred embodiment of the present invention.

### MODE FOR CARRYING OUT THE INVENTION

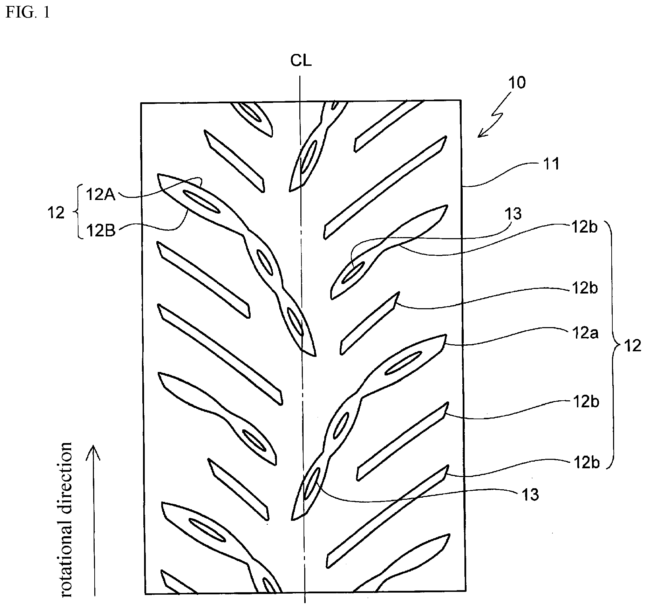

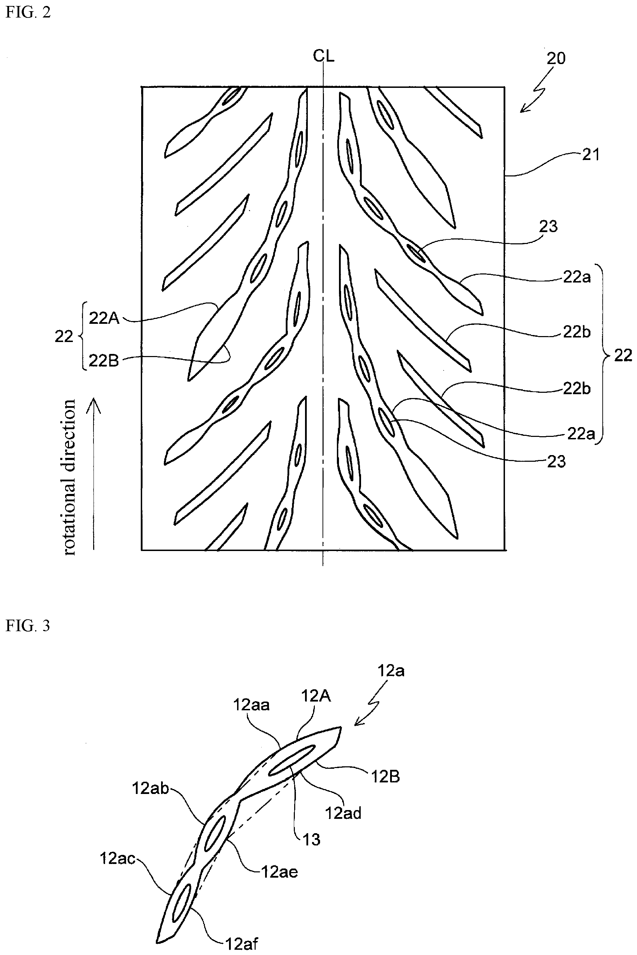

Now, the motorcycle tire of the present invention will be described in detail with reference to the drawings. The tire of the present invention has an annularly formed tread. FIG. 1 is one exemplary partial developed view showing the tread in a motorcycle tire according to the present invention, which is a front tire. FIG. 2 is another exemplary partial developed view showing the tread in a motorcycle tire according to the present invention, which is a rear tire. The arrows in FIGS. 1 and 2 represent the rotational direction of the tire.

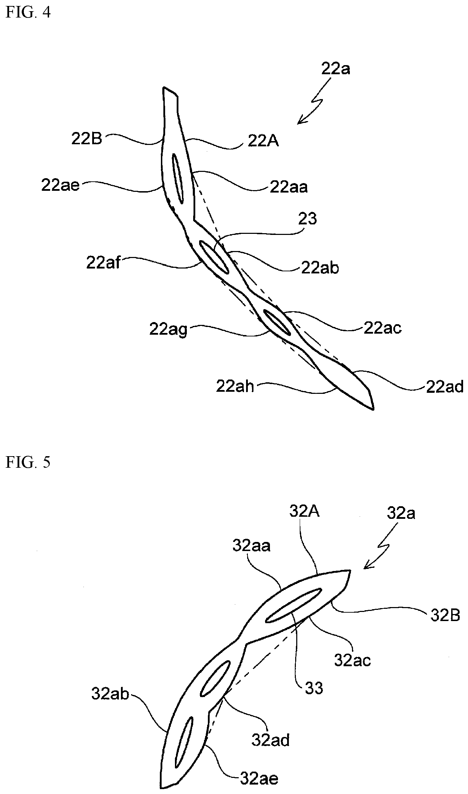

The tire 10 or 20 of the present invention has a tread 11 or 21 with main grooves 12 or 22. At least one of the groove wall on the first grounding side in the rotational direction and the groove wall on the later grounding side in the rotational direction of at least one main groove of the main grooves 12 or 22 in the tire 10 or 20 of the present invention has three or more widened portions enlarged outward in the groove width direction (hereinafter also referred to as "main grooves 12a or 22a having three or more widened portions"). FIG. 3 depicts one exemplary plan view showing the main groove in a motorcycle tire according to the present invention, while FIG. 4 depicts another exemplary plan view showing the main groove in a motorcycle tire according to the present invention.

In the embodiment shown in FIG. 3, in the main groove 12a having three or more widened portions, a groove wall 12A on the first grounding side in the rotational direction is a curvilinear shape having widened portions 12aa, 12ab, and 12ac and a groove wall 12B on the later grounding side in the rotational direction is a curvilinear shape having widened portions 12ad, 12ae, and 12af. In the embodiment shown in FIG. 4, in the main groove 22a having three or more widened portions, a groove wall 22A on the first grounding side in the rotational direction is a curvilinear shape having widened portions 22aa, 22ab, 22ac, and 22ad and a groove wall 22B on the later grounding side in the rotational direction is a curvilinear shape having widened portions 22ae, 22af, 22ag, and 22ah.

In this way, the tire 10 or 20 of the present invention can achieve improved water draining capacity by providing at least one of the groove wall 12A or 22A on the first grounding side in the rotational direction and the groove walls 12B or 22B on the later grounding side in the rotational direction of at least one of the main grooves 12 with three or more widened portions. When driving on a wet ground, the tire allows water to be temporarily contained in the widened portions and compressed upon ground contact, thereby draining the water toward the shoulder area like a pump. In other words, water entering into a main groove 12a or 22a having three or more widened portions moves along the main groove 12a or 22a having three or more widened portions, and is drained along the extension lines of the groove wall 12A or 22A on the first grounding side in the rotational direction and the groove wall 12B or 22B on the later grounding side in the rotational direction, which results in improved water draining capacity as compared with a main groove 12 that linearly drains water.

Main grooves 12a and 12b having two or more widened portions have a larger amount (length) of edges than linear main grooves, allowing more edges to be in contact with the ground, which results in improvement of the grip performance, braking performance, and traction performance. The tires 10 and 20 of the present invention have a structure comprising at least one section where the extending length along the groove wall between the tops of adj acent widened portions is 0.3 to 50% longer than the length of the virtual straight line connecting the tops of the adjacent widened portions. In particular, at least one main groove has three or more widened portions enlarged outward in the groove width direction and has at least one section where the extending length along the groove wall between the tops of adj acent widened portions is 0.3 to 50% longer than the length of the virtual straight line connecting the tops of the adjacent widened portions.

In the embodiment shown in FIG. 3, a structure is provided where at least one of the extending lengths along the groove walls between the top of the widened portion 12aa and the top of the widened portion 12ab, between the top of the widened portion 12ab and the top of the widened portion 12ac, between the top of the widened portion 12ad and the top of the widened portion 12ae, and between the top of the widened portion 12ae and the top of the widened portion 12af, in the main grooves 12a having three or more widened portions, are 0.3 to 50% longer than the corresponding virtual straight lines connecting the tops of the widened portions. In the embodiment shown in FIG. 4, a structure is provided where at least one of the lengths along the groove walls between the top of the widened portion 22aa and the top of the widened portion 22ab, between the top of the widened portion 22ab and the top of the widened portion 22ac, between the top of the widened portion 22ac and the top of the widened portion 22ad, between the top of the widened portion 22ae and the top of the widened portion 22af, between the top of the widened portion 22af and the top of the widened portion 22ag, and between the top of the widened portion 22ag and the top of the widened portion 22ah, in the main groove 22a having three or more widened portions, are 0.3 to 50% longer than the corresponding virtual straight lines connecting the tops of the widened portions.

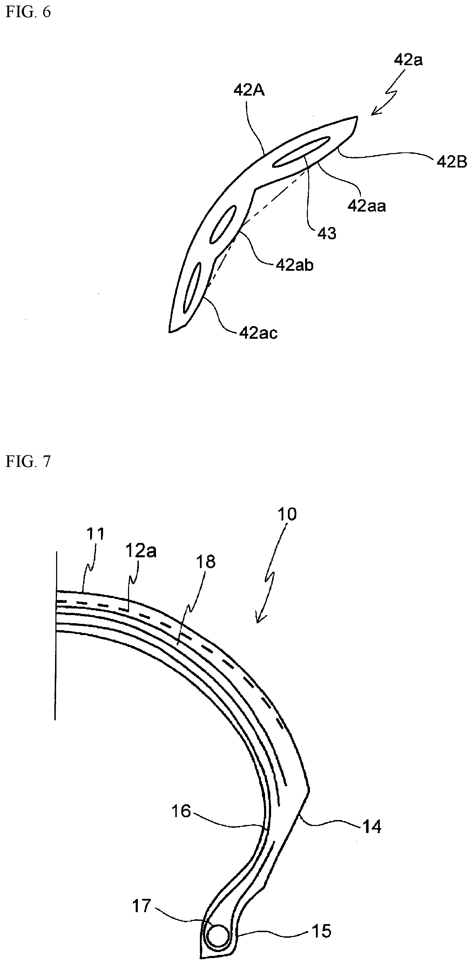

It is noted that, although the tires 10 and 20 of the present invention, as shown in FIGS. 1 and 2, have the same numbers of widened portions in the groove wall 12A or 22A on the first grounding side in the rotational direction and of widened portions in the groove wall 12B or 22B on the later grounding side in the rotational direction, the tire of the present invention does not necessarily have the same numbers of widened portions in the groove wall 12A or 22A on the first grounding side in the rotational direction and of widened portions in the groove wall 12B or 22B on the later grounding side in the rotational direction. FIGS. 5 and 6 depict other exemplary plan views each showing a main groove in a motorcycle tire according to the present invention. The main groove 32a having three or more widened portions shown in FIG. 5 has two widened portions (widened portions 32aa and 32ab) in the groove wall 32A on the first grounding side in the rotational direction, and three widened portions (widened portions 32ac, 32ad, and 32ae) in the groove wall 32B on the later grounding side in the rotational direction. On the other hand, the main groove 42a having three or more widened portions shown in FIG. 6 has no widened portion in the groove wall 42A on the first grounding side in the rotational direction because of its monotonically linear shape, and three widened portions (widened portions 42aa, 42ab, and 42ac) in the groove wall 42B on the later grounding side in the rotational direction.

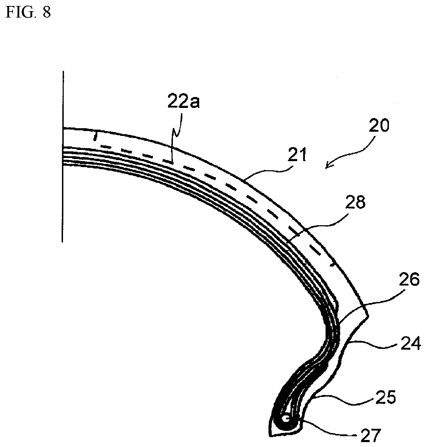

Preferably, main grooves 12a or 22a having three or more widened portions in the tire 10 or 20 of the present invention become shallow outward in the tread width direction. FIG. 7 shows the half cross-sectional view in the tire width direction of a motorcycle tire according to one preferred embodiment of the present invention. FIG. 8 shows the half cross-sectional view in the tire width direction of a motorcycle tire according to another preferred embodiment of the present invention. This structure can ensure the grip performance of the tread 11 or 21 during cambering. To better obtain such an effect, a main groove 12a or 22a having three or more widened portions preferably has about 40 to 95% groove depth at the outer end in the tread width direction as compared with that at the inner end in the tread width direction.

The depth of a main groove 12a or 22a having three or more widened portions in the tire 10 or 20 of the present invention may gradually decrease outward in the tread width direction, or may stepwisely become shallow outward in the tread width direction. The tire 10 or 20 of the present invention may also have main grooves 12b or 22b other than the main grooves 12a or 22a having three or more widened portions, which main grooves 12b or 22b may also have such a structure that the groove bottom becomes shallow outward in the tread width direction. In this case, all the main grooves 12b or 22b other than the main grooves 12a or 22a having three or more widened portions may become shallow outward in the tread width direction, or only some of the main grooves 12b or 22b may become shallow outward in the tread width direction.

The positions of the main grooves 12a and 12b having two or more widened portions in the tire 10 or 20 of the present invention are not particularly restricted. The main grooves 12a and 12b may be positioned only in the center area or the shoulder areas. Preferably, as shown, the main grooves 12a or 22a having three or more widened portions extend from the center area to the shoulder areas. This structure can further improve the water draining capacity during straight driving and cambering.

In the embodiment shown in FIG. 1, the main grooves 12a having three or more widened portions, which extend over the center line CL, may be ended before the center line CL. The main grooves 12a having three or more widened portions may also extend from one shoulder area to the other shoulder area over the center area in the tread 11. In this case, the main grooves 12a having three or more widened portions may be ended before the ends of the tread in the width direction, or may extend to the ends in the width direction to form an opening. Similarly in the embodiment shown in FIG. 2, the main grooves 22a having three or more widened portions, which are ended before the center line CL, may extend over the center line CL. The main grooves 22a having three or more widened portions may also extend from one shoulder area to the other shoulder area over the center area in the tread 21. Similarly in this case, the main grooves 22a having three or more widened portions may be ended before the ends of the tread in the width direction, or may extend to the ends in the width direction to form an opening.

Preferably, the angles of the groove wall 12A or 22A on the first grounding side in the rotational direction and the groove wall 12B or 22B on the later grounding side in the rotational direction in a main groove having three or more widened portions in the tire 10 or 20 of the present invention are ±20° relative to the perpendicular direction at the bottom of the main groove having three or more widened portions. Formation of the groove walls of the main grooves 12a or 22a having three or more widened portions in a nearly perpendicular state allows for appropriate rigidity of the tread 11 or 21, resulting in improvement of the braking performance and the traction performance.

Preferably, in addition, the number of widened portions of a main groove 12a or 22a having three or more widened portions in the tire 10 or 20 of the present invention is 20 or less. This is because a larger number of widened portions may contrarily impair the water draining capacity of main grooves. The number of widened portions is more preferably 10 or less, and still more preferably 5 or less.

Preferably, in addition, the main grooves 12a or 22a having three or more widened portions in the tire 10 or 20 of the present invention are provided with ridges in the bottoms of the widened portions. As shown in FIGS. 1 and 2, the main grooves 12a or 22a having three or more widened portions can be provided with ridges 13 or 23 in the groove bottoms of the widened portions, exhibiting better water draining along the groove wall 12A or 22A on the first grounding side in the rotational direction and the groove wall 12B or 22B on the later grounding side in the rotational direction. To better obtain such an effect, the shape of the ridge 13 or 23 is preferably along the extending direction of the main groove 12a or 22a having three or more widened portions.

The height of a ridge 13 or 23 is not particularly limited as long as it is less than the depth of the main groove 12a or 22a having three or more widened portions, and is preferably 90% or less of the depth of the main groove 12a or 22a having three or more widened portions. Preferably, in addition, the extending length of a ridge 13 or 23 is 30 to 50% of that of the widened portion. It is noted that ridges 13 or 23 may be provided in all or only some of widened portions present in the main grooves 12a or 22a having three or more widened portions. In addition, the ridges 13 or 23 may be provided in all or only some of the main grooves 12a or 22a having three or more widened portions present in the tread 11 or 21.

Preferably, as shown in the figures, the tire 10 or 20 of the present invention includes the main grooves 12a or 22a having three or more widened portions, such that the numbers of the widened portions in the groove wall 12A or 22A on the first grounding side in the rotational direction and in the groove wall 12B or 22B on the later grounding side in the rotational direction are equal; such that the widened portions in the groove wall 12A or 22A on the first grounding side in the rotational direction and the widened portions in the groove wall 12B or 22B on the later grounding side in the rotational direction are positioned to be coupled with each other; and such that the thus-formed widened portions are provided with the ridges 13 or 23 in their groove bottoms. Similarly, in this case, all or some widened portions may be provided with the ridges 13 or 23 in their groove bottoms.

The structure of the tread 11 or 21 in the tire 10 or 20 of the present invention is not particularly restricted as long as at least one main groove has three or more widened portions as claimed in claim 1. For example, such a structure is preferable that at least one main groove becomes shallow outward in the tread width direction. For the other structures, known structures can be used.

As shown, in addition to the main grooves 12a or 22a having three or more widened portions, the main grooves 12b or 22b not having two or more widened portions may be provided. The shape of the main grooves 12b or 22b not having two or more widened portions can be linear as in the embodiments shown in FIGS. 1 and 2, or may be curved. Similarly, as described above, the groove bottom of the main grooves 12b or 22b may become shallow outward in the tread width direction. In this case, all the main grooves 12b or 22b other than the main grooves 12a or 22a having three or more widened portions may become shallow outward in the tread width direction, or only some of the main grooves 12b or 22b may become shallow outward in the tread width direction.

In the embodiment shown in FIG. 1, two main grooves 12a having three or more widened portions and three main grooves 12b are cyclically arranged at approximately regular intervals, but the present invention is not restricted thereto. In the embodiment shown in FIG. 2, two main grooves 22a having three or more widened portions and two main grooves 22b are cyclically arranged at approximately regular intervals, but the present invention is not restricted thereto.

In addition, the tire 10 or 20 of the present invention may be provided with a shallow groove, depending on the purpose, that is shallower and narrower than the main grooves 12 or 22, for example, with a groove depth of 0.1 to 2.0 mm and a groove width of 0.5 to 2.0 mm. Again, no particular restriction is imposed on the shape of the shallow groove.

The tire 10 or 20 of the present invention may be provided with circumferential main grooves extending in the tire circumferential direction. However, in motorcycles that turn by tilting the tire, main grooves provided from the center toward the shoulders can more efficiently promote water draining. When the tire 10 or 20 of the present invention has a spiral belt layer as an outermost reinforcing layer in which reinforcing cords exist in the substantially tire circumferential direction, circumferential main grooves provided in the center area may cause cracks in the groove bottom along the reinforcing cord layer. Therefore, in such a structure, any circumferential main grooves should not be provided in the center area.

For the configurations other than the tread 11 or 21, the tire 10 or 20 of the present invention can employ any known structures. As shown in FIGS. 7 and 8, the tire 10 or 20 of the present invention includes the tread 11 or 21; a pair of side walls 14 or 24 adjacent to both sides of the tread 11 or 21; a pair of beads 15 or 25 each adjacent to the pair of side walls 14 or 24; and a carcass 16 or 26 composed of at least one carcass plies (one ply in the illustrated embodiments) for reinforcement of these members between the beads 15 or 25. In the illustrated embodiments, the end portion of the carcass 16 or 26 is engaged to the bead core 17, 27 by being wound around the bead core from the inside toward the outside of the tire, but may be engaged by being sandwiched with bead wires from both sides.

In addition, the tires shown in the figures are provided with a belt 18 or 28 composed of at least one (two in the illustrated embodiment) belt layers on the outer side of the carcass 16 or 26 in the tire radial direction. The belt cord in the belt layer 18 or 28 can be any known extensible and highly elastic cords, and can be selected as appropriate from, for example, organic fibers such as aromatic polyamides (Aramid, e.g., trade-named Kevlar, from DuPont de Nemours, Inc.), polyethylene naphthalate (PEN), polyethylene terephthalate (PET), rayon, and nylon; and those made of materials such as steel, glass fibers, and carbon fibers. Such a belt 18 or 28 may be composed of two or more tilted belt layers arranged such that the directions of the cords in the layers intersect with each other, or may one or more spiral belt layer with the direction of the cord being substantially tire circumferential.

The tire 10 or 20 of the present invention can be applied to both tires with a radial structure and a bias structure. The tire 10 or 20 of the present invention is a motorcycle tire achieving both excellent dry and wet performance and can be particularly preferably applied to tires for motorcycles that are often affected by the weather.

### EXAMPLES

Now, the motorcycle tire of the present invention will be described in more detail with reference to examples.

### <Example>

A front tire with the tread pattern shown in FIG. 1 and a tire size of 120/70ZR17 was prepared. The main grooves had a structure that gradually became shallow with the main groove depth at the center portion being 5 mm and the main groove depth at the shoulder portion being 3 mm. The height of ridges in the bottom of main grooves was 0.8mm. The length along the groove wall between tops of adjacent widened portions was adjusted to be 0.5 to 5.0% longer than the length of the straight line connecting the adjacent widened portions. In addition, a rear tire with the tread pattern shown in FIG. 2 and a tire size of 180/55ZR17 was prepared. The main grooves had a structure that gradually became shallow with the depth at the center portion being 7 mm and the depth at the shoulder portion being 3 mm. The height of ridges in the bottom of main grooves was 0.8mm. The length along the groove wall between tops of adjacent widened portions was adjusted to be 0.5 to 5% longer than the length of the straight line connecting the adjacent widened portions. The front tire obtained in Example was integrated into a wheel having a rim size of MT3.50×17 with the internal pressure being 250 kPa, while the rear tire was integrated into a wheel having a rim size of MT5.50×17 with the internal pressure being 290 kPa, which were then mounted on a motorcycle with a piston displacement of 1000 cc as front and rear wheels for evaluation as described below.

### <Comparative Example>

Tires were prepared in the same manner as in Example except that all main grooves were linear. Similar to Example described above, they were mounted on a motorcycle as front and rear wheels.

### <Reference Example>

Reference example shows estimated values on the assumption that main grooves with the groove wall on the first grounding side in the rotational direction and the groove wall on the later grounding side in the rotational direction each having two widened portions were arranged from the center portion to the shoulder portions, based on the results obtained from the main grooves that have two widened portions and are provided in the shoulder portions shown in FIG. 1.

### <Evaluation>

The grip performance and straight-line acceleration performance (hydroplaning performance) on wet ground of the front and rear tires were evaluated based on the rider's impression. The obtained results were calculated by setting those from Comparative Example as an index value of 100. The critical behavior, traction performance during acceleration, and braking performance of the rear tire in a middle-to-low speed range were also evaluated based on the rider's impression. The obtained results were calculated by setting those from Comparative Example as an index value of 100. The straight-line acceleration performance (hydroplaning performance) was evaluated by performing driving with acceleration on wet ground, and measuring the motorcycle driving speed and number of tire revolution, considering the speed at which the number of tire revolution increased (at the time when the driving tire went into a skid causing the peripheral speed of the tire to exceed the motorcycle driving speed) as the hydroplaning occurrence speed.

**[Table 1]**

| | | Comparative Example | Reference Example | Example |
|---|---|---|---|---|
| Wet performance | Front grip performance | 100 | 102 | 103 |
| | Rear grip performance | 100 | 100 | 101 |
| | Critical behavior of rear tire | 100 | 101 | 103 |
| | Traction performance during acceleration | 100 | 102 | 103 |

Table 1 shows that the tire of the present invention has improved water draining capacity and can exert both excellent dry and wet performance.

### DESCRIPTION OF SYMBOLS

10 and 20 motorcycle tire (tire)
11 and 21 tread
12, 22, 32, and 42 main groove
12a, 22a, 32a, and 42a main groove having three or more widened portions
12A, 22A, 32A, and 42A groove wall on the first grounding side in the rotational direction
12B, 22B, 32B, and 42B groove wall on the later grounding side in the rotational direction
13, 23, 33, and 43 ridge
14 and 24 side wall
15 and 25 bead
16 and 26 carcass
17 and 27 bead core
18 and 28 belt

## Claims

1. A motorcycle tire (10, 20), comprising an annularly formed tread (11, 21),
wherein the tread (11, 21) has main grooves (12, 22),
wherein at least one of the main grooves (12a, 22a) has three or more widened portions (12aa-12af, 22aa-22ah) that are enlarged outward in a groove width direction in at least one of the groove wall (12A, 22A) on the first grounding side in the rotational direction and the groove wall (12B, 22B) on the later grounding side in the rotational direction, and
wherein the at least one main groove (12a, 22a) has at least one section where the extending length along the groove wall between the tops of adjacent widened portions (12aa-12af, 22aa-22ah) is 0.3 to 50% longer than the length of the virtual straight line connecting the tops of the adjacent widened portions (12aa-12af, 22aa-22ah).

2. The motorcycle tire (10, 20) according to claim 1, wherein the at least one main groove (12a, 22a) becomes shallower outward in a tread width direction.

3. The motorcycle tire (10, 20) according to claim 1 or 2, wherein the at least one main groove (12a, 22a) extends from a center area to a shoulder area.

4. The motorcycle tire (10, 20) according to any one of claims 1 to 3, wherein the angles of the groove wall (12A, 22A) on the first grounding side in the rotational direction and the groove wall (12B, 22B) on the later grounding side in the rotational direction are ±20° relative to the perpendicular direction at the bottom of the at least one main groove (12a, 22a).

5. The motorcycle tire according to any one of claims 1 to 4, wherein the number of the widened portions (12aa-12af, 22aa-22ah) is 20 or less.

6. The motorcycle tire according to any one of claims 1 to 5, wherein the at least one main groove (12a, 22a) is provided with a ridge (13, 23) in the bottom of the widened portions (12aa-12af, 22aa-22ac, 22ae-22ag).

## Patentansprüche

1. Motorradreifen (10, 20), der eine ringförmige Lauffläche (11, 21) umfasst,
wobei die Lauffläche (11, 21) Hauptrillen (12, 22) aufweist,
wobei mindestens eine der Hauptrillen (12a, 22a) drei oder mehr verbreiterte Abschnitte (12aa-12af, 22aa-22ah), die in einer Rillenbreitenrichtung nach außen vergrößert sind, in mindestens einer von der Rillenwand (12A, 22A) auf der ersten Bodenberührungsseite in der Drehungsrichtung und der Rillenwand (12B, 22B) auf der späteren Bodenberührungsseite in der Drehungsrichtung aufweist, und
wobei die mindestens eine Hauptrille (12a, 22a) mindestens eine Sektion aufweist, wo die Erstreckungslänge entlang der Rillenwand zwischen den Oberteilen benachbarter verbreiterter Abschnitte (12aa-12af, 22aa-22ah) 0,3 bis 50 % länger ist als die Länge der virtuellen geraden Linie, welche die Oberteile der benachbarten verbreiterten Abschnitte (12aa-12af, 22aa-22ah) verbindet.

2. Motorradreifen (10, 20) nach Anspruch 1, wobei die mindestens eine Hauptrille (12a, 22a) in einer Laufflächenbreitenrichtung nach außen hin flacher wird.

3. Motorradreifen (10, 20) nach Anspruch 1 oder 2, wobei sich die mindestens eine Hauptrille (12a, 22a) von einem Mittenbereich bis zu einem Schulterbereich erstreckt.

4. Motorradreifen (10, 20) nach einem der Ansprüche 1 bis 3, wobei die Winkel der Rillenwand (12A, 22A) auf der ersten Bodenberührungsseite in der Drehungsrichtung und der Rillenwand (12B, 22B) auf der späteren Bodenberührungsseite in der Drehungsrichtung ± 20° im Verhältnis zu der senkrechten Richtung an der Sohle der mindestens einen Hauptrille (12a, 22a) betragen.

5. Motorradreifen nach einem der Ansprüche 1 bis 4, wobei die Anzahl der verbreiterten Abschnitte (12aa-12af, 22aa-22ah) 20 oder weniger beträgt.

6. Motorradreifen nach einem der Ansprüche 1 bis 5, wobei die mindestens eine Hauptrille (12a, 22a) mit einem Steg (13, 23) in der Sohle der verbreiterten Abschnitte (12aa-12af, 22aa-22ac, 22ae-22ag) versehen ist.

## Revendications

1. Pneumatique pour motocycle (10, 20), comprenant une bande de roulement de forme annulaire (11, 21),
dans lequel la bande de roulement (11, 21) comporte des rainures principales (12, 22),
dans lequel au moins une des rainures principales (12a, 22a) comporte trois parties élargies (12aa-12af, 22aa-22ah) ou plus qui sont élargies vers l'extérieur, dans une direction de la largeur de la rainure, dans au moins l'une de la paroi de rainure (12A, 22A) sur le premier côté de contact au sol, dans la direction de rotation, et de la paroi de rainure (12B, 22B) sur le côté de contact au sol ultérieur, dans la direction de rotation, et
dans lequel l'au moins une rainure principale (12a, 22a) comporte au moins une section dans laquelle la longueur d'extension le long de la paroi de rainure, entre les dessus de parties élargies adjacentes (12aa-12af, 22aa-22ah) est supérieure de 0,3 à 50 % à la longueur de la ligne droite virtuelle connectant les dessus des parties élargies adjacentes (12aa-12af, 22aa-22ah).

2. Pneumatique pour motocycle (10, 20) selon la revendication 1, dans lequel l'au moins une rainure principale (12a, 22a) devient moins profonde vers l'extérieur, dans une direction de la largeur de la bande de roulement.

3. Pneumatique pour motocycle (10, 20) selon la revendication 1 ou 2, dans lequel l'au moins une rainure principale (12a, 22a) s'étend d'une zone centrale vers une zone d'épaulement.

4. Pneumatique pour motocycle (10, 20) selon l'une quelconque des revendications 1 à 3, dans lequel les angles de la paroi de rainure (12A, 22A) sur le premier côté de contact au sol, dans la direction de rotation, et de la paroi de rainure (12B, 22B) sur le côté de contact au sol ultérieur, dans la direction de rotation, correspondent à ± 20° par rapport à la direction perpendiculaire au niveau du fond de l'au moins une rainure principale (12a, 22a).

5. Pneumatique pour motocycle selon l'une quelconque des revendications 1 à 4, dans lequel le nombre des parties élargies (12aa-12af, 22aa-22ah) correspond à 20 ou moins.

6. Pneumatique pour motocycle selon l'une quelconque des revendications 1 à 5, dans lequel l'au moins une rainure principale (12a, 22a) est dotée d'une nervure (13, 23) dans le fond des parties élargies (12aa-12af, 22aa-22ac, 22ae-22ag).
